# EUROPEAN PATENT APPLICATION

(11) **EP 4 815 045 A1**
(43) Date of publication of application: **30.09.2026**
(21) Application number: 24908253.8
(22) Date of filing: 11.12.2024
(51) Int. Cl.: H01M 4/13, H01M 10/0562, H01M 4/525, H01M 4/505, H01M 4/02

(54) **POSITIVE ELECTRODE FOR LITHIUM SECONDARY BATTERY, MANUFACTURING METHOD THEREOF, AND LITHIUM SECONDARY BATTERY COMPRISING SAME**

(30) Priority: 21.12.2023 KR 20230188656
(71) Applicant: SK On Co., Ltd., Seoul 03161 (KR)
(72) Inventor: RYU, Jae Chan, Daejeon 34124 (KR); KIM, Sung Kyung, Daejeon 34124 (KR)
(74) Representative: Prüfer & Partner mbB Patentanwälte · Rechtsanwälte
(86) International application number: PCT/KR2024/096684
(87) International publication number: WO 2025/135971

(57) **Abstract**

A positive electrode for a secondary battery according to embodiments disclosed herein may comprise: a positive electrode current collector; and a positive electrode active material layer formed on the positive electrode current collector and including a positive electrode active material and a solid electrolyte. The solid electrolyte may include a first solid electrolyte and a second solid electrolyte having a larger particle diameter than the first solid electrolyte, the porosity of the positive electrode active material layer may be 10% to 20% (exclusive of 20%), and the mixture density of the positive electrode active material layer may be 2.3 g/cc or more. Thus, the initial efficiency and capacity retention of the secondary battery may be improved.

## Description

### [TECHNICAL FIELD]

The disclosure relates to a cathode for a lithium secondary battery, a method of fabricating the same and a lithium secondary battery including the same. More particularly, the disclosure relates to a cathode including a solid electrolyte, a method of fabricating the same and a lithium secondary battery including the same.

### [BACKGROUND ART]

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as a hybrid vehicle, etc.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

Currently commercially available lithium secondary batteries mainly use a liquid electrolyte, and safety issues such as leakage, ignition, explosion, etc., exist due to rapid environmental change such as temperature change, external impact, etc. To solve the issues, solid electrolytes are being developed to achieve stability and improve energy density.

An all-solid-state battery may include a solid electrolyte such as a polymer, an oxide or a sulfide as an electrolyte. Accordingly, stability against ignition and explosion due to external impact, external environmental change, etc., may be enhanced.

However, compared to a lithium secondary battery into which the liquid electrolyte is injected, an electrolyte may not easily fill pores generated by an active material in the all-solid-state battery. Accordingly, a porosity within an electrode may not be sufficiently reduced

### DESCRIPTIONS OF THE INVENTION

### [Technical Objective]

According to an objective of the present disclosure, there is provided a cathode for a secondary battery having improved initial efficiency.

According to an objective of the present disclosure, there is provided a method of fabricating a cathode for a secondary battery having improved initial efficiency.

According to an objective of the present disclosure, there is provided a secondary battery including a cathode for a secondary battery.

### [Means for Resolving the Objective]

A cathode for a secondary battery according to example embodiments may include a cathode current collector, and a cathode active material layer formed on the cathode current collector and including a cathode active material and a solid electrolyte. The solid electrolyte may include a first solid electrolyte and a second solid electrolyte having an average particle diameter greater than that of the first solid electrolyte. A porosity of the cathode active material layer may be 10% or more and less than 20%, and a mixture density of the cathode active material layer may be 2.3 g/cc or more.

In some embodiments, a weight ratio of the first solid electrolyte to the second solid electrolyte may be in a range from 0.3 to 4.0.

In some embodiments, a weight of the first solid electrolyte may be greater than or equal to a weight of the second solid electrolyte.

In some embodiments, an average particle diameter (D50) of the first solid electrolyte above may be 1.5 µm or less, and an average particle diameter of the second solid electrolyte is 2.0 µm or more.

In some embodiments, a ratio of an average particle diameter of the second solid electrolyte to an average particle diameter of the first solid electrolyte may be greater than 1.0, and 10 or less.

In some embodiments, a solid electrolyte may be included in an amount from 10 wt% to 40 wt% based on a total weight of the cathode active material layer.

In some embodiments, an average particle diameter of the cathode active material may be in a range from 2.0 µm to 14.0 µm.

In some embodiments, a ratio of an average particle diameter of the cathode active material to an average particle diameter of the first solid electrolyte may be in a range from 1.5 to 24.0.

In some embodiments, a ratio of an average particle diameter of the cathode active material to an average particle diameter of the second solid electrolyte may be in a range from 0.25 to 6.0.

In some embodiments, the first solid electrolyte and the second solid electrolyte may be sulfide-based solid electrolytes.

In some embodiments, the first solid electrolyte and the second solid electrolyte may be sulfide-based solid electrolytes including Li, P, S and Cl.

In some embodiments, the cathode active material layer may include a styrene butadiene styrene block copolymer (SBS), butadiene rubber (BR), nitrile butadiene rubber (NBR), styrene butadiene rubber (SBR), or a combination thereof.

A secondary battery according to example embodiments may include the above-described cathode, an anode opposing the cathode and including an anode active material layer, and a solid electrolyte layer disposed between the cathode and the anode.

In some embodiments, the anode active material layer may include the anode active material having a particle shape and a solid electrolyte, and the solid electrolyte may include the same solid electrolyte as the first solid electrolyte included in the cathode active material layer.

In some embodiments, the solid electrolyte may include the same solid electrolyte as the second solid electrolyte included in the cathode active material layer.

In a method of manufacturing a cathode for a secondary battery, a cathode slurry may be prepared by mixing a first solid electrolyte, a second solid electrolyte having a larger particle diameter than that of the first solid electrolyte, and a cathode active material. The cathode slurry may be loaded and dried on a cathode current collector to form a preliminary active material layer. The preliminary active material layer may be pressed to form a cathode active material layer that has porosity of 10% or more and less than 20%, and a mixture density of 2.3 g/cc or more.

In some embodiments, a weight ratio of the first solid electrolyte to the second solid electrolyte in the cathode slurry may be in a range from 0.3 to 4.0.

In some embodiments, a weight of the first solid electrolyte in the cathode slurry may be greater than or equal to a weight of the second solid electrolyte.

In some embodiments, the preliminary active material layer may be pressed at a pressure of 250 Mpa to 500 Mpa at a temperature of 50 °C to 80 °C.

In some embodiments, a mixture density of the preliminary active material layer may be 1.5 g/cc or more.

### [Effects of the Invention]

A cathode according to example embodiments may include a cathode active material layer including solid electrolytes having different particle diameters. A porosity and a mixture density of the cathode active material layer may satisfy predetermined ranges. Thus, a distance between particles in the cathode active material layer may be properly maintained, so that side reactions between the cathode active material and the solid electrolytes may be reduced, and initial efficiency may be improved.

Each of the solid electrolytes having different particle diameters in the cathode active material layer may be included in a predetermined amount. Thus, the porosity and the mixture density may be adjusted in a predetermined range.

The cathode may be prepared by being pressed with a predetermined pressure. Thus, the porosity and the mixture density may be adjusted in a predetermined range even after preparation of the cathode.

The cathode for a secondary battery, a method of fabricating the same, and the secondary battery including the same of the present disclosure may be widely applied in green technology fields such as an electric vehicle, a battery charging station, a solar power generation, a wind power generation using batteries, etc. The anode active material for a secondary battery, a method of fabricating the same, and the secondary battery including the same of the present disclosure may also be used in eco-friendly electric vehicles and hybrid vehicles for preventing climate change by suppressing air pollution and greenhouse gas emission.

### [Brief Descriptions of the Drawings]

FIG. 1 is a schematic cross-sectional view illustrating a cathode for a secondary battery according to example embodiments.
FIG. 2 is a schematic cross-sectional view showing a cathode active material layer according to example embodiments.
FIG. 3 is a schematic flowchart for explaining a method of fabricating a cathode for a secondary battery according to example embodiments.
FIG. 4 is a graph showing an initial efficiency and an initial charge/discharge capacity in Examples 1 to 3.
FIG. 5 is a graph showing an initial efficiency and an initial charge/discharge capacity in Comparative Examples 1 to 3 and Comparative Example 5.
FIG. 6 is a graph showing an initial efficiency and an initial charge/discharge capacity in Example 4.
FIG. 7 is a graph showing an initial efficiency and an initial charge/discharge capacity in Comparative Example 4.

### [Preferable Implementation for Practicing the Invention]

According to example embodiments, a cathode for a secondary battery including different types of solid electrolytes and a secondary battery including the same are provided.

Hereinafter, embodiments of the present disclosure will be described in more detail with reference to the accompanying drawings. However, the accompanying drawings attached to the present specification illustrate some embodiments of the present disclosure and serve to further understand the technical idea of the present disclosure together with the above-described contents of the present disclosure, and thus the present disclosure should not be interpreted as being limited to the matters described in such drawings.

Hereinafter, unless otherwise defined in the present specification, when a part of a layer, a film, a thin film, a region, a plate, etc., is refer to as being "on" or "over" another part, this may include not only the case where the other part is "directly on " but also the case where there is another part therebetween.

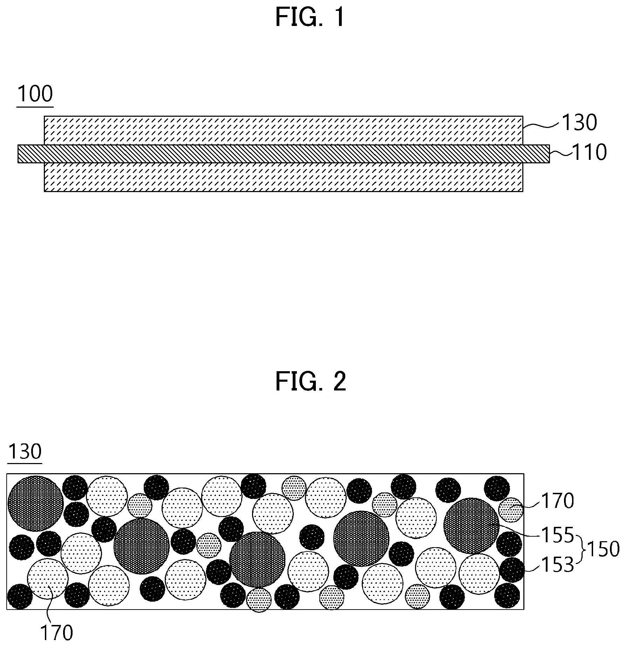

FIGS. 1 and 2 are schematic cross-sectional views illustrating a cathode and a cathode active material layer for a secondary battery, respectively, in accordance with example embodiments.

Referring to FIGS. 1 and 2, a cathode for a secondary battery (hereinafter, that may be referred to as "a cathode") may include a cathode current collector 110 and a cathode active material layer 130 formed on at least one surface of the cathode current collector 110.

The cathode active material layer 130 may include a cathode active material 170 and a solid electrolyte 150.

In example embodiments, the solid electrolyte 150 may include a first solid electrolyte 153 and a second solid electrolyte 155 having different average particle diameters (D₅₀) from each other.

The "average particle diameter D₅₀" may be a particle diameter at a volume fraction of 50% in a volume cumulative particle size distribution obtained by accumulating particles in the order from a small particle diameter. The term "particle diameter" may refer to the longest diameter of a particle.

For example, the volume cumulative particle size distribution of the solid electrolyte 150 may have a bimodal distribution. For example, an average particle diameter of the first solid electrolyte and an average particle diameter of the second solid electrolyte may be measured from each of peaks from the volume cumulative particle size distribution of the solid electrolyte 150.

In some embodiments, the average particle diameter of the first solid electrolyte 153 may be smaller than the average particle diameter of the second solid electrolyte 155. Thus, when the first solid electrolyte 153 and the second solid electrolyte 155 are mixed, the first solid electrolyte 153 may be located in a void between the second solid electrolytes 155. Accordingly, pores of the cathode active material layer 130 may be reduced without hindering a movement path of lithium ions.

In some embodiments, a ratio of the average particle diameter of the second solid electrolyte 155 to the average particle diameter of the first solid electrolyte 153 may be greater than 1.0 and equal to or less than 10, from 1.5 to 10, from 1.5 to 9.0, from 1.5 to 8.0, from 2.0 to 7.5, from 2.5 to 7.0, or from 2.5 to 6.0.

In the above range, a porosity of the cathode active material layer 130 may be appropriately adjusted, and an ion conductivity may be further increased.

In some embodiments, the average particle diameter of the first solid electrolyte 153 may be 1.5 µm or less, from 0.1 µm to 1.5 µm, from 0.1 µm to 1.3 µm, from 0.3 µm to 1.3 µm, from 0.3 µm to 1.2 µm, or from 0.5 µm to 1.1 µm.

In the above range, a particle diameter of the first solid electrolyte 153 particles may be reduced while preventing aggregation between the first solid electrolytes 153. Thus, the lithium ion conductivity may be further improved.

In some embodiments, the second solid electrolyte 155 may have an average particle diameter of 1.5 µm or more, from 2.0 µm to 8.0 µm, from 2.5 µm to 8.0 µm, from 2.5 µm to 7.5 µm, from 2.7 µm to 7.0 µm, or from 2.8 µm to 6.0 µm.

In the above range, the solid electrolyte 150 may be uniformly dispersed in the cathode active material layer 130 while preventing a pinhole phenomenon caused by particles having a large particle diameter. Accordingly, structural stability of the cathode active material layer 130 and the ion conductivity of the solid electrolyte 150 may be further improved.

In some embodiments, in the cathode active material layer, a weight basis content of the first solid electrolyte 153 may be greater than or equal to a weight basis content of the second solid electrolyte 155. For example, in the cathode active material layer, a weight of the first solid electrolyte 153 may be greater than or equal to a weight of the second solid electrolyte 155. Accordingly, the first solid electrolyte 153 may entirely fill the voids generated by the second solid electrolyte 155.

In some embodiments, in the cathode active material layer, a weight ratio of the first solid electrolyte 153 to the second solid electrolyte 155 may be in a range from 0.3 to 9.0, from 0.3 to 7.0, from 0.3 to 6.0, from 0.3 to 5.0, from 1.0 to 4.0, or from 2.0 to 4.0.

For example, in the cathode active material layer, the first solid electrolyte 153 may be in a range from 25 wt% to 90 wt%, from 50 wt% to 90 wt%, or from 60 wt% to 80 wt% based on the total weight of the solid electrolyte 150.

For example, in the cathode active material layer, the second solid electrolyte 155 may be in a range from 10 wt% to 75 wt%, from 10 wt% to 50 wt%, or from 20 wt% to 40 wt% based on the total weight of the solid electrolyte 150.

In the above range, packing properties between the first solid electrolyte 153 and the second solid electrolyte 155 may be further increased, and the voids generated between particles may be reduced. Thus, contact and connectivity between the solid electrolytes 150 may be increased, and capacity and initial efficiency of the secondary battery may be further improved.

In some embodiments, a BET specific surface area (e.g., a specific surface area after pressing) of the first solid electrolyte 153 may be 15 m²/g or less, from 2.0 m²/g to 15 m²/g, from 5.0 m²/g to 15 m²/g, from 7.0 m²/g to from 15 m²/g, from 7.0 m²/g to 15 m²/g, from 10 m²/g to 15 m²/g, or from 12 m²/g to 15 m²/g.

In the above range, a contact area with the cathode active material 170 may be prevented from being excessively increased, and thus a side reaction between the first solid electrolyte 153 and the cathode active material 170 may be reduced. Thus, generation of gas due to the side reaction may be suppressed, thereby preventing damages and life-span reduction of the cathode active materials 170.

In some embodiments, a BET specific surface area (e.g., a specific surface area after pressing) of the second solid electrolyte 155 may be 15 m²/g or less, from 2.0 m²/g to 15 m²/g, from 7.0 m²/g to 10 m²/g, from 2.0 m²/g to 7.0 m²/g, from 3.5 m²/g to 7.0 m²/g, or from 5.0 m²/g to 7.0 m²/g.

In the above range, a contact area between the second solid electrolyte 155 and the cathode active material 170 may be increased, so that the capacity of the secondary battery may be enhanced.

In some embodiments, the solid electrolyte 150 may be a sulfide-based solid electrolyte. For example, the first solid electrolyte 153 and the second solid electrolyte 155 may be represented by Chemical Formula 1 below.

[Chemical Formula 1] LₐM_{b}P_{c}S_{d}Xₑ

In Chemical Formula 1, 0≤a≤12, 0≤b≤6, 0≤c≤6, 0≤d≤12, and 0≤e≤9.

L may be an alkali metal such as Li, Na, K, Rb, Cs, etc.

M may be at least one element selected from the group consisting of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and X may be at least one element selected from the group consisting of F, Cl, Br, I and O.

In some embodiments, the sulfide-based solid electrolyte may be an LPS-based solid electrolyte including Li, P and S; an LGPS-based solid electrolyte including Li, P, Ge and S; an azirodite-based solid electrolyte including Li, P, S and Cl; or an LSiPSCl-based solid electrolyte including Li, Si, P, S and Cl.

For example, Li₂S-P₂S₅, Li₁₀GeP₂S₁₂, Li₁₀SnP₂S₁₂, Li_{9.54}Si_{1.74}P_{1.44}S_{11.7}Cl_{0.3}, Li₁₀(Si_{0.5}Ge_{0.5})P₂S₁₂, Li₁₀(Ge_{0.5}Sn_{0.5})P₂S₁₂, Li₁₀(Si_{0.5}Sn_{0.5})P₂S₁₂, Li₁₀GeP₂S_{11.7}O_{0.3}, Li_{9.6}P₃S₁₂, Li9P3S9O3, Li10.35Ge1.35P1.65S12, Li10.35Si1.35P1.65S12, Li9.81Sn0.81P2.19S12, Li9.42Si1.02P2.1S9.96O2.04, Li₆PS₅Cl, or the like, may be used as the _{.}sulfide-based solid electrolyte.

In some embodiments, the solid electrolyte 150 may be in a range from 10 wt% to 40 wt%, 15 wt% to 35 wt%, 15 wt% to 30 wt%, or 15 wt% to 25 wt% based on a total weight of the cathode active material layer 130. In the above range, movement of lithium ions may be facilitated by the solid electrolyte 150, and the capacity and power properties of the secondary battery may be further improved.

In some embodiments, an average particle diameter of the cathode active material 170 may be in a range from 2.0 µm to 12 µm, from 2.0 µm to 7.0 µm, from 3.0 µm to 7.0 µm, from 4.0 µm to 6.8 µm, or from 4.5 µm to 6.5 µm.

In the above range, the cathode active material 170 may be located in the voids formed between the solid electrolytes 150. Accordingly, the ion conductivity may be further improved by a contact between the cathode active material 170 and the solid electrolyte 150, and the porosity of the cathode active material layer 130 may be appropriately adjusted to improve the initial efficiency of the secondary battery.

In an embodiment, a ratio of the average particle diameter of the cathode active material 170 to the average particle diameter of the first solid electrolyte 153 may be in a range from 1.5 to 24.0, from 1.5 to 14.0, from 1.5 to 11.0, from 1.5 to 8.0, from 3.5 to 7.5, or from 4.0 to 7.0.

In an embodiment, a ratio of the average particle diameter of the cathode active material 170 to the average particle diameter of the second solid electrolyte 155 may be in a range from 0.25 to 6.0, from 0.25 to 4.0, from 0.5 to 3.0, from 0.5 to 2.0, or from 0.75 to 2.0.

In the above range, mixing and packing properties between the cathode active material 170 and the solid electrolyte 150 may be improved. Thus, an increase in porosity of the cathode active material layer 130 during the pressing may be suppressed, and the initial efficiency of the secondary battery may be improved.

The cathode active material 170 may include, e.g., at least one compound selected from a lithium cobalt-based oxide, a lithium manganese-based oxide, a lithium nickel-based oxide, or a lithium composite oxide, or the like. For example, the cathode active material may include a layered compound such as a lithium cobalt oxide (LiCoO₂) or lithium nickel oxide (LiNiO₂)_{,} or a lithium manganese oxide such as LiMnO_{3,} LiMn₂O₃ and LiMnO₂; a lithium copper oxide (Li₂CuO₂); a vanadium oxide such as LiV₃O_{8,} LiFe₃O_{4,} V₂O₅ and Cu₂VO₇, a lithium iron phosphate oxide, etc.

In some embodiments, the cathode active material 170 may include a compound represented by Chemical Formula 2.

[Chemical Formula 2] Li_{y}Ni_{z}Me_{1-z}O₂

In Chemical Formula 2, 0.95≤y≤1.08, 0.5≤z<1, and Me may be Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, Zr, or a combination thereof.

In an embodiment, the cathode active material 170 includes nickel (Ni), and may contain at least one of cobalt (Co) or manganese (Mn). For example, a nickel-cobalt-manganese (NCM)-based lithium oxide may be used as the cathode active material particle.

For example, nickel (Ni) may be provided as a metal related to the capacity of a lithium secondary battery. As a nickel content becomes higher, the capacity and power of the lithium secondary battery may be enhanced. However, if the nickel content increases excessively, a life-span may be reduced and mechanical and electrical stability may be degraded.

In an embodiment, a conductivity or a resistance of the lithium secondary battery may be improved by cobalt (Co), and mechanical and electrical stability of the lithium secondary battery may be improved by manganese (Mn).

The chemical structure represented by Chemical Formula 2 represents a bonding relationship included in a layered structure or a crystal structure of the cathode active material particles, and is not intended to exclude an additional elements. For example, Me may include Co and/or Mn, and Co and Mn may be provided as main active elements of the cathode active material together with Ni. Chemical Formula 2 is provided to express the bonding relationship of the main active elements, and is to be understood as encompassing introduction and substitution of the additional element.

In an embodiment, an auxiliary element for enhancing chemical stability of the cathode active material 170 or the layered structure/crystal structure in addition to the main active elements may be further included. The auxiliary element may be mixed together in the layered structure/crystal structure to form a bond, and this case is to be understood as being included within a range of the chemical structure represented by Chemical Formula 2.

The cathode active material 170 may be present in an amount from 60 wt% to 90 wt%, from 65 wt% to 85 wt%, from 70 wt% to 85 wt%, or from 75 wt% to 85 wt% based on the total weight of the cathode active material layer 130. In the above the range, energy density, power and capacity of the secondary battery may be improved.

In example embodiments, the cathode active material layer 130 may further include a conductive material or a binder.

The conductive material may be included to promote electron transfer between the cathode active material particles. For example, the conductive material may include a carbon-based conductive material such as graphite, a vapor grown carbon fiber (VGCF), carbon nanotube, graphene, carbon black, etc., and/or a metal-based conductive material such as tin, tin oxide, titanium oxide, a perovskite material including LaSrCoO₃, LaSrMnO₃, etc.

The binder may include, e.g., a non-aqueous binder and/or an aqueous binder. For example, the binder may include a non-aqueous binder such as N,N'-bis[3-(triethoxysilyl)propyl]urea, polyethylene oxide (PEO), vinylidene fluoride-hexafluoropropylene copolymer (PVDF-co-HFP), polyvinylidene fluoride (PVDF), polyacrylonitrile, polymethyl methacrylate, etc., or an aqueous binder such as butadiene rubber (BR), nitrile butadiene rubber (NBR), styrene butadiene rubber (SBR), a styrene butadiene styrene block copolymer (SBS), etc. These may be used alone or in a combination of two or more therefrom.

Specifically, the binder may include a styrene butadiene styrene block copolymer (SBS), butadiene rubber (BR), nitrile butadiene rubber (NBR), an styrene butadiene rubber (SBR), or a combination thereof.

In example embodiments, a porosity of the cathode active material layer 130 may be 10% or more and less than 20%.

The porosity may be a percentage of a total pore volume in a total volume of the cathode active material layer 130.

When the porosity of the cathode active material layer 130 is less than 10%, the contact area between the cathode active material 170 and the solid electrolyte 150 may be excessively increased, and thus a side reaction between the cathode active material 170 and the solid electrolyte 150 may occur. Damages to the cathode active materials 170 may be accelerated or the life-span may be reduced by gas generated by the side reaction.

When the porosity of the cathode active material layer 130 is 20% or more, the contact area between the cathode active material 170 and the solid electrolyte 150 may be excessively reduced, and thus a transfer amount of lithium ions may be reduced. Accordingly, the capacity of the secondary battery may be reduced, and a capacity retention may also be reduced.

In some embodiments, the porosity of the cathode active material layer 130 may be in a range from 12% to 19%, from 13% to 19%, or from 14% to 18%. In the above range, the life-span and capacity properties of the secondary battery may be further improved.

In example embodiments, a mixture density before pressing of the cathode active material layer 130 may be 1.5 g/cc or more. For example, a cathode slurry may be loaded and dried on the cathode current collector 110 to form an active material layer (e.g., a preliminary active material layer), and the mixture density before pressing of the cathode active material layer 130 may be measured before pressing the preliminary active material layer.

In example embodiments, a mixture density of the cathode active material layer 130 may be 2.3 g/cc or more. For example, when the mixture density of the cathode active material layers 130 formed by pressing the preliminary active material layer is less than 2.3 g/cc, sufficient active sites through from the cathode may not be achieved, and high capacity properties may not be sufficiently implemented.

In some embodiments, the mixture density of the cathode active material layer may be in a range from 2.3 g/cc to 3.9 g/cc, from 2.3 g/cc to 3.5 g/cc, from 2.4 g/cc to 3.2 g/cc, or from 2.5 g/cc to 2.9 g/cc.

For example, when the mixture density of the cathode active material layer 130 is 3.9 g/cc or less, mesopores in the cathode active material layer 130 may be reduced, and the side reaction of the cathode active material and the solid electrolyte may be further suppressed.

The specific surface area of the solid electrolyte 150, the porosity, and the mixture density of the cathode active material layer 130 may be controlled by a coating speed, a thickness, a pressing pressure, the number of pressing, etc., of a slurry for forming the cathode active material layer.

In some embodiments, an area of the cathode active material layer 130 may be 0.75 cm² or more, 1 cm² or more, or 3 cm² or more. In some embodiments, the area of the cathode active material layer 130 may be 5 cm² or more, 7 cm² or more, 10 cm² or more, or 12 cm² or more. The cathode active material layer 130 having the area in the above range, the above-described cathode for a secondary battery can be applied to a coin cells, and can also be applied to a pouch cell. Although not limited thereto, in the case of the coin cell, the area of the cathode active material layer 130 may be 3.5 cm² or less, 2.5 cm² or less, 1.5 cm² or less, or 1 cm² or less. In the case of the pouch cell, the area may be 460 cm² or less, 300 cm² or less, 150 cm² or less, 50 cm² or less, or 20 cm² or less.

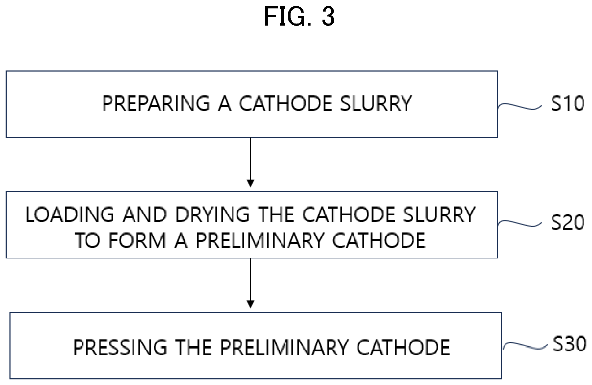

FIG. 3 is a schematic flowchart for explaining a method of manufacturing cathode for a secondary battery according to example embodiments.

Referring to FIG. 3, a cathode slurry may be prepared by mixing a solid electrolyte and a cathode active material (e.g., a process S10).

In example embodiments, the cathode slurry may be prepared by mixing a cathode active material and a solid electrolyte. For example, the cathode active material, the first solid electrolyte, the second solid electrolyte, etc., as described above may be mixed and stirred in a solvent to prepare the cathode slurry. The cathode slurry may further include the above-described conductive material, the binder, and/or an additive.

In some embodiments, a weight-basis content of the first solid electrolyte in the cathode slurry may be greater than or equal to a weight-basis content of the second solid electrolyte.

In an embodiment, a weight ratio of the first solid electrolyte to the second solid electrolyte in the cathode slurry may be in a range from 0.3 to 9.0, from 0.3 to 7.0, from 0.3 to 6.0, from 0.3 to 5.0, from 0.3 to 4.0, from 1.0 to 4.0, or from 2.0 to 4.0.

The solvent may include at least one selected from the group consisting of, e.g., acrylonitrile (ACN), xylene, toluene, butyl butyrate, dimethylformamide (DMF), dimethyl sulfoxide (DMSO), etc.

In example embodiments, the cathode slurry may be loaded and dried on at least one surface of a cathode current collector to form a preliminary active material layer (e.g., a process S20).

The cathode current collector may include stainless steel, nickel, aluminum, titanium, copper, or an alloy thereof, and may include, e.g., aluminum or an aluminum alloy.

In some embodiments, the cathode slurry may be loaded on an area of 0.75 cm² or more, 1 cm² or more, or 3 cm² or more of the at least one surface of the cathode current collector. In an embodiment, the cathode slurry may be loaded on an area of 5 cm² or more, 7 cm² or more, 10 cm² or more, or 12 cm² or more of the at least one surface of the both cathode current collector. Thus, the cathode for a secondary battery which can be applied to both a coin cell and a pouch cell. Although not limited thereto, in the case of the coin cell, the cathode slurry may be loaded on an area of 3.5 cm² or less, 2.5 cm² or less, 1.5 cm² or less, or 1 cm² or less of the at least one surface of the cathode current collector. In the case of the pouch cell, the cathode slurry may be loaded on an area of 460 cm² or less, 300 cm² or less, 150 cm² or less, 50 cm² or less, or 20 cm² or less of the at least one surface of the cathode current collector.

In some embodiments, the cathode slurry loaded on the cathode current collector may be dried at a temperature of 90 °C to 110 °C for 20 hours to 30 hours. In the above ranges, the solvent at an interior of the preliminary cathode active material layer may be entirely evaporated. For example, if the solvent remains in the preliminary cathode active material layer, voids may occur in the cathode active material layer due to evaporation of the solvent remaining after the pressing process.

In an embodiment, the preliminary cathode active material layer may be formed to have a mixture density of 1.5 g/cc or more. For example, the mixture density of the preliminary cathode active material layer may be in a range from 1.5 g/cc to 2.2 g/cc, from 1.7 g/cc to 2.0 g/cc, or from 1.8 g/cc to 2.0 g/cc.

In example embodiments, the preliminary cathode active material layer may be pressed to form a cathode active material layer (e.g., a process S30). The pressing process may be performed by a flat plate pressing of a uniaxial pressing type or an isotropic pressing of a tri-axial pressing type.

In some embodiments, the pressing may be an isotropic pressing process performed by, e.g., a process such as a heating compression, a low temperature compression, or a roll press.

In an embodiment, the pressing may be performed by a heat compression process, and the preliminary cathode may be put in a packaging material and sealed, and then pressed and molded by the heat compression process, e.g., a warm isostatic press (WIP). In this case, a stress may act uniformly in all directions compared to the case using the plate pressing to suppress bending phenomenon of a cathode composite.

In some embodiments, the pressing may be performed at a temperature of 50 °C to 80 °C at a pressure of 250 Mpa to 500 Mpa for 1 minute to 60 minutes. For example, the pressing may be performed at a temperature of 60 °C to 70 °C at a pressure of 250 Mpa to 350 Mpa for 25 minutes to 35 minutes.

In the above ranges, adhesion between the cathode active material and the solid electrolyte may be increased.

The lithium secondary battery may include the above-described cathode for a secondary battery (hereinafter, that may be referred to as "cathode") and an anode facing the cathode.

In example embodiments, the anode may include an anode current collector and am anode active material layer formed on an anode current collector.

The anode current collector may include gold, stainless steel, nickel, aluminum, titanium, copper, or an alloy thereof, and may include, e.g., copper or an alloy.

The anode active material layer may include an anode active material. The anode active material known in the art capable of intercalating and de-intercalating lithium ions may be used without any specific limitation. For example, a carbon-based material such as a crystalline carbon, an amorphous carbon, a carbon composite, a carbon fiber, etc.; a lithium metal; a silicon-based material containing silicon, or a tin-based material containing tin may be used.

Examples of the amorphous carbon include hard carbon, coke, a mesocarbon microbead (MCMB) fired at 1,500 °C or less, a mesophase pitch-based carbon fiber (MPCF), or the like. Examples of the crystalline carbon may include a graphite-based carbon such as natural graphite, artificial graphite, a graphitized coke, a graphitized MCMB, a graphitized MPCF, or the like.

The lithium metal may include a pure lithium metal, or a lithium metal having a protective layer for suppressing a dendrite growth, or the like. In an embodiment, a lithium metal-containing layer deposited or coated on the anode current collector may be used as the anode active material layer. In an embodiment, a lithium thin film may be used as the anode active material layer.

The lithium metal may be a lithium alloy, and an element included in the lithium alloy may include aluminum, zinc, bismuth, cadmium, antimony, silicon, lead, tin, gallium, or indium, etc.

The silicon-based material may include Si, SiOₓ (0<x<2), a metal-doped SiOₓ (0<x<2), a silicon-carbon composite, or the like. The metal may include lithium and/or magnesium, and the metal-doped SiOₓ (0<x<2) may include a metal silicate.

In an embodiment, the anode active material may include a carbon-based material, a silicon-based material or a combination thereof which have particle shapes. The carbon-based material and the silicon-based material may be the above described carbon-based material and silicon-based material. For example, the carbon-based material and the silicon-based material may be anode active materials in the particle shapes.

In an embodiment, when the anode active material has the particle shape, the anode active material layer may include the above-described solid electrolyte. For example, the anode active material layer may include the anode active material in the particle shape and the sulfide-based solid electrolyte, and the sulfide-based solid electrolyte may be, e.g., an azirodite-based solid electrolyte.

In an embodiment, the solid electrolyte included in the anode active material layer may include a solid electrolyte the same as or different from the solid electrolyte included in the cathode active material layer described above. For example, the same solid electrolyte as the first solid electrolyte or the second solid electrolyte may be included, and specifically, may include the same solid electrolyte as the first solid electrolyte.

In an embodiment, when the anode active material has the particle shape, the anode active material layer may further include a binder. The binder included in the anode active material layer may be the same as that described above. In an embodiment, the binder of the anode active material layer may be the same as or different from the binder used in the cathode active material layer.

In an embodiment, the anode active material layer may include a conductive material, and specifically, the conductive material may be the same as that described above. In an embodiment, the conductive material of the anode active material layer may be the same as or different from the conductive material used in the cathode active material layer.

Electrode tabs (a cathode tab and a anode tab) may protrude from each of the cathode current collector and the anode current collector, and may extend to one side of a case of the secondary battery. The electrode tabs may be fused together with the one side of the case to form electrode leads (a cathode lead and an anode lead) extending or exposed to an outside of the case.

In some embodiments, a solid electrolyte layer may be interposed between the cathode and the anode. For example, the secondary battery may be provided as an all-solid battery.

In an embodiment, the solid electrolyte layer may include a sulfide-based solid electrolyte. The sulfide-based solid electrolyte included in the solid electrolyte layer may include the same or different sulfide-based solid electrolyte included in the cathode active material layer and the anode active material layer. Specifically, the sulfide-based solid electrolyte included in the solid electrolyte layer may include the same solid electrolyte as the second solid electrolyte included in the anode active material layer.

In an embodiment, when the anode active material layer includes the anode active material having the particle shape, the anode active material layer may include the same solid electrolyte as the first solid electrolyte included in the cathode active material layer, and the solid electrolyte layer may include the same solid electrolyte as the second solid electrolyte included in the cathode active material.

In one embodiment, the solid electrolyte layer may further include a binder. The binder may be the same as or different from the binder included in the above-described cathode active material layer and the above-described anode active material layer.

In example embodiments, an electrode cell may be defined by the above-described cathode, the anode opposing the cathode, and the solid electrolyte layer disposed between the cathode and the anode, and a plurality of the electrode cells may be stacked to form an electrode assembly.

In an embodiment, a separator may not be interposed between the cathode and the anode, and the electrode assembly may be formed by stacking a plurality of the electrode cells. Thus, a space for winding and folding of the separator may not be required, and an internal space efficiency of the electrode assembly may be improved to increase the capacity.

In an embodiment, the solid electrolyte layer may be formed directly on the cathode or the anode. The solid electrolyte layer may be directly formed on the cathode or the anode, so that an internal short circuit caused by misalignment of an electrode structure may be prevented.

The electrode assembly may be accommodated in the case to define the lithium secondary battery. For example, the lithium secondary battery may be manufactured in a cylindrical type using a can, a prismatic type, a pouch type, or a coin type.

Embodiments of the present disclosure described above include the following aspects, and may be implemented through at least one of the following aspects.

A cathode for a secondary battery according to aspect 1 of the present disclosure includes a cathode current collector; and a cathode active material layer formed on the cathode current collector and including a cathode active material and a solid electrolyte, wherein the solid electrolyte includes a first solid electrolyte and a second solid electrolyte having an average particle diameter greater than that of the first solid electrolyte, and a porosity of the cathode active material layer is 10% or more and less than 20%, and a mixture density of the cathode active material layer is 2.3 g/cc or more.

According to aspect 2, a weight ratio of the first solid electrolyte to the second solid electrolyte may be in a range from 0.3 to 4.0 in the aspect 1.

According to aspect 3, a weight of the first solid electrolyte may be greater than or equal to a weight of the second solid electrolyte in the aspect 1 or the aspect 2. According to aspect 4, an average particle diameter (D50) of the first solid electrolyte above may be 1.5 µm or less, and an average particle diameter of the second solid electrolyte may be 2.0 µm or more in any one the aspects 1 to 3.

According to aspect 5, a ratio of an average particle diameter of the second solid electrolyte to an average particle diameter of the first solid electrolyte is greater than 1.0, and 10 or less in any one of the aspects 1 to 4.

According to aspect 6, a solid electrolyte may be included in an amount from 10 wt% to 40 wt% based on a total weight of the cathode active material layer in any one of the aspects 1 to 5.

According to aspect 7, an average particle diameter of the cathode active material may be in a range from 2.0 µm to 14.0 µm in any one of the aspects 1 to 6.

According to aspect 8, a ratio of an average particle diameter of the cathode active material to an average particle diameter of the first solid electrolyte may be in a range from 1.5 to 24.0 in any one of the aspects 1 to 7.

According to aspect 9, a ratio of an average particle diameter of the cathode active material to an average particle diameter of the second solid electrolyte may be in a range from 0.25 to 6.0 in any one of the aspects 1 to 8.

According to aspect 10, the first solid electrolyte and the second solid electrolyte may be sulfide-based solid electrolytes in any one of the aspects 1 to 9.

According to aspect 11, the first solid electrolyte and the second solid electrolyte may be sulfide-based solid electrolytes including Li, P, S and Cl in any one of the aspects 1 to 10.

According to aspect 12, the cathode active material layer may include a styrene butadiene styrene block copolymer (SBS), butadiene rubber (BR), nitrile butadiene rubber (NBR), styrene butadiene rubber (SBR), or a combination thereof in any one of the aspects 1 to 11.

A secondary battery according to aspect 13 may include the cathode of any one of the aspects 1 to 12; an anode opposing the cathode and including an anode active material layer; and a solid electrolyte layer disposed between the cathode and the anode.

According to aspect 14, the anode active material layer may include the anode active material having a particle shape and a solid electrolyte, and the solid electrolyte may include the same solid electrolyte as the first solid electrolyte included in the cathode active material layer in the aspect 13.

According to aspect 15, the solid electrolyte layer may include the same solid electrolyte as the second solid electrolyte included in the cathode active material layer in the aspect 13 or the aspect 14.

A method of manufacturing a cathode for a secondary battery according to aspect 16 includes preparing a cathode slurry by mixing a first solid electrolyte, a second solid electrolyte having a larger particle diameter than that of the first solid electrolyte, and a cathode active material; loading and drying the cathode slurry on a cathode current collector to form a preliminary active material layer; and pressing the preliminary active material layer to form a cathode active material layer that has porosity of 10% or more and less than 20%, and a mixture density of 2.3 g/cc or more.

According to aspect 17, a weight ratio of the first solid electrolyte to the second solid electrolyte in the cathode slurry may be in a range from 0.3 to 4.0 in the aspect 16.

According to aspect 18, a weight of the first solid electrolyte in the cathode slurry may be greater than or equal to a weight of the second solid electrolyte in the aspect 16 or the aspect 17.

According to aspect 19, the preliminary active material layer may be pressed at a pressure of 250 Mpa to 500 Mpa at a temperature of 50 °C to 80 °C in any one of the aspects 16 to 18.

According to aspect 20, a mixture density of the preliminary active material layer may be 1.5 g/cc or more in any one the aspects 16 to 19.

### [Implementation for Practicing the Invention]

Hereinafter, exemplary embodiments are presented to help the understanding of the present disclosure, but these embodiments are provided as examples of the present disclosure and do not limit the scope of the attached claims. It is clear to those skilled in the art that various changes and modifications to the embodiments can be implemented within the scope of the present disclosure and technical ideas, and that these changes and modifications fall within the scope of the attached claims.

### Examples and Comparative Examples

### Example 1

### (1) Fabrication of cathode for secondary battery

LiNi_{0.8}Co_{0.1}Mn_{0.1}O₂ as a cathode active material, Super-P as a conductive material, nitrile butadiene rubber (NBR) as a binder, and azirodite sulfide (Li₆PS₅Cl) as a solid electrolyte were mixed in a weight ratio of 77:1.5:1.5:20 to prepare a cathode slurry.

The solid electrolyte was prepared by mixing a first solid electrolyte (Li₆PS₅Cl) with an average particle diameter of 1 µm and a second solid electrolyte (Li₆PS₅Cl) with an average particle diameter of 3 µm.

An average particle diameter of the cathode active material and a weight ratio of the first solid electrolyte and the second solid electrolyte are shown in Table 1 below.

Thereafter, the cathode slurry was uniformly coated on an aluminum foil having a thickness of 18 µm in a loading amount of 18.3 mg/cm², and dried in a convection oven at 100 °C for 24 hours. The dried slurry was pressed at 80 °C at 300 Mpa for 30 minutes to obtain a cathode for a secondary battery.

### (2) Fabrication of anode for secondary battery

Natural graphite as an active material, Super-P as a conductive material, NBR as a binder, and an azirodite sulfide (Li₆PS₅Cl) solid electrolyte having an average particle diameter of 1.0 µm or less as a solid electrolyte were mixed in a weight ratio of 77:1.0:3.0:19 to prepare an anode slurry. The anode slurry was coated on a copper foil having a thickness of 10 µm, dried, and pressed to obtain an anode for a secondary battery.

### (3) Fabrication of solid electrolyte sheet

An azirodite sulfide (Li₆PS₅Cl) solid electrolyte having an average particle diameter of 3.0 µm or less as a solid electrolyte and NBR as a binder were mixed in a weight ratio of 97:3 to form a slurry. The slurry was coated on a release film, and then dried and pressed to prepare a solid electrolyte sheet.

### (4) Fabrication of secondary battery cell

The prepared solid electrolyte sheet was notched to a size of 3 cm×4 cm, and the cathode and the anode were sequentially stacked on the notched solid electrolyte sheet to form an electrode cell.

Thereafter, tab portions of the cathode and the anode were each welded, and an assembly of the welded cathode/solid electrolyte sheet/anode was put into the pouch and sealed.

### (5) Measurement of porosity

A porosity of cathode for a secondary battery as measured under the following conditions using an AutoPore V 9600 Mercury Intrusion Porosimeter manufactured by Mercury porosimetry Micromeritics.
Sample weight: 1g±0.1g
Electrode sampling: 1*5 cm sheets proper to the sample weight
Measurement media: mercury
Measurement conditions: from 0.2 psig to 33,000 psig, measured at about 150 points
Interval for mercury indentation: 10 seconds
Mercury contact angle setting: 130 degrees
The measured porosities are shown in Table 1 below.

### (6) Measurement of mixture density

In the fabrication of the cathode, a thickness, a length, and a width of the cathode were measured using a micrometer after pressing to calculate a volume, and a mixture density was measured using a weight value of the mixture.

The measured mixture densities are shown in Table 1.

### Examples 2 and 3, Comparative Examples 1 to 3, and Comparative Example 5

Secondary batteries of Examples 2 and 3, Comparative Examples 1 to 3, and Comparative Examples 5 were fabricated by the same method as that in Example 1, except that the average particle diameter of the cathode active material, the weight ratio of the first solid electrolyte and the second solid electrolyte, and the porosity and the mixture density of the cathode active material layer were adjusted as shown in Table 1 below.

### Example 4 and Comparative Example 4

Cathodes for a secondary battery and solid electrolyte sheets of Example 4 and Comparative Example 4 were fabricated by the same method as that in Example 1, except that the average particle diameter of the cathode active material, the weight ratio of the first solid electrolyte and the second solid electrolyte, and the porosity and the mixture density of the cathode active material layer were adjusted as shown in Table 1.

Thereafter, the prepared solid electrolyte sheet was notched to a size of 3 cm×4 cm, and the cathode was stacked on the notched solid electrolyte sheet to form a half-cell.

**[Table 1]**

| | average particle diameter of cathode active material (µm) | first solid electrolyte weight: second solid Electrolyte weight (weight ratio (first solid electrolyte/second solid electrolyte)) | porosity (%) | mixture density after pressing (g/cc) | cell type |
|---|---|---|---|---|---|
| Example 1 | 5.3 | 3:1 (3) | 16 | 2.70 | full cell |
| Example 2 | 5.3 | 1:1 (1) | 18 | 2.58 | cull cell |
| Example 3 | 5.3 | 1:3 (0.33) | 19 | 2.57 | cull cell |
| Example 4 | 5.3 | 3:1(3) | 16 | 2.70 | half-cell |
| Comparative Example 1 | 5.3 | 1:0 (-) | 9 | 2.75 | full cell |
| Comparative Example 2 | 5.3 | 0:1 (0) | 21 | 2.51 | full cell |
| Comparative Example 3 | 7.6 | 1:0 (-) | 21 | 2.53 | full cell |
| Comparative Example 4 | 7.6 | 3:1 (3) | 20 | 2.65 | half-cell |
| Comparative Example 5 | 5.3 | 3:1 (3) | 19 | 2.23 | full cell |

### Experimental Example

### (1) Measurement of initial charge/discharge capacity and evaluation on initial efficiency

Each secondary battery manufactured as a half-cell or a full cell according to the above-described Examples and Comparative Examples was charged (half-cell: CC-CV 0.05 C 3.65 V 0.01 C CUT-OFF, full cell: CC-CV 0.1 C 4.2 V 0.01 C CUT-OFF), and a battery capacity (initial charge capacity) was measured, and then discharged (half-cell: CC 0.05 C 1.9 V CUT-OFF, full cell: CC 0.1 C 2.5 V CUT-OFF) and a battery capacity (initial discharge capacity) was measured in a chamber at 30°C or 45°C.

An initial capacity efficiency was evaluated by converting the measured initial discharge capacity divided by the measured initial charge capacity into a percentage (%).

The results of the full-cell and half-cell evaluations are shown in Table 2 below.

**[Table 2]**

| category | initial charging capacity (mAh/g) | initial discharge capacity (mAh/g) | initial efficiency (%) |
|---|---|---|---|
| Example 1 | 209.6 | 190.6 | 90.9 |
| Example 2 | 208.1 | 187.6 | 90.1 |
| Example 3 | 206.4 | 185.2 | 89.7 |
| Example 4 | 211.7 | 192.3 | 90.8 |
| Comparative Example 1 | 221.0 | 181.2 | 81.9 |
| Comparative Example 2 | 231.4 | 187.5 | 81.0 |
| Comparative Example 3 | 213.4 | 183.2 | 85.8 |
| Comparative Example 4 | 220.8 | 177.9 | 80.6 |
| Comparative Example 5 | 207.7 | 170.1 | 81.9 |

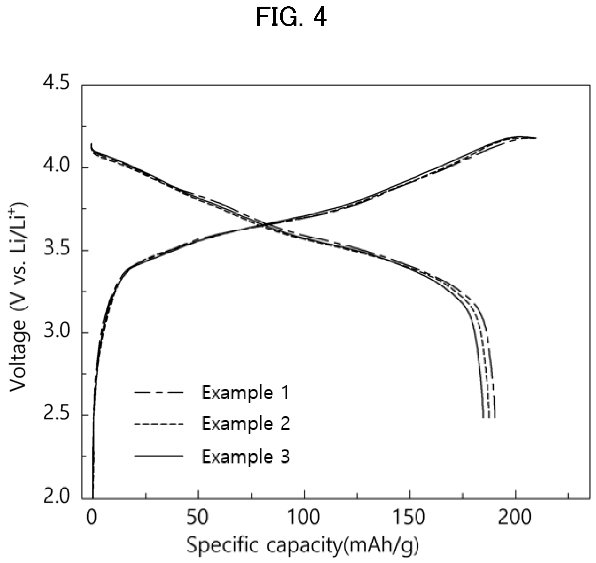

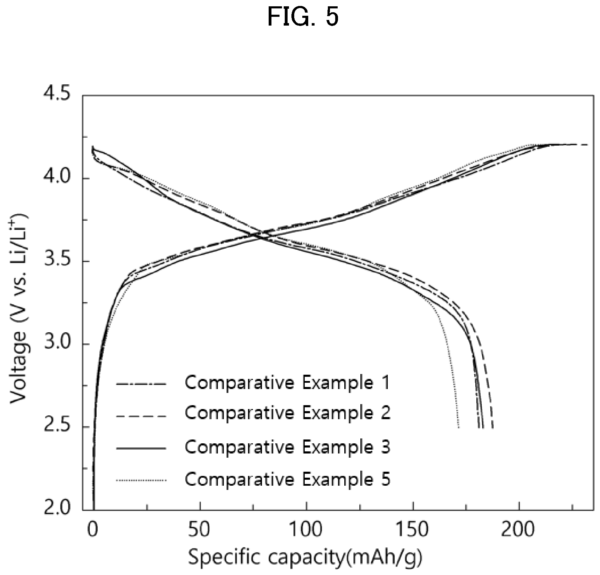

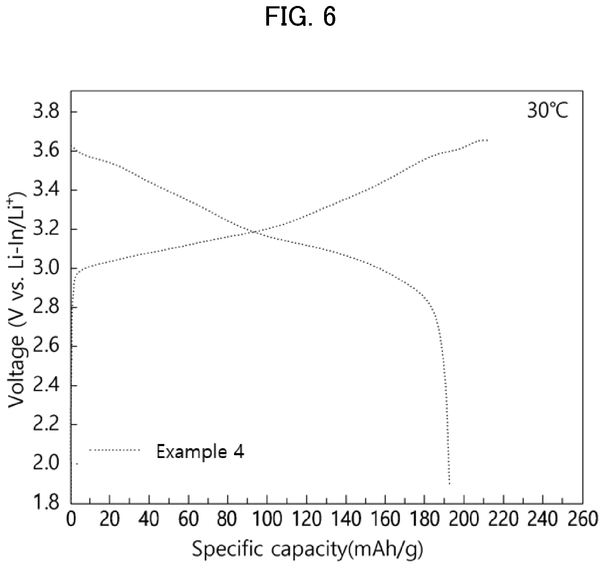

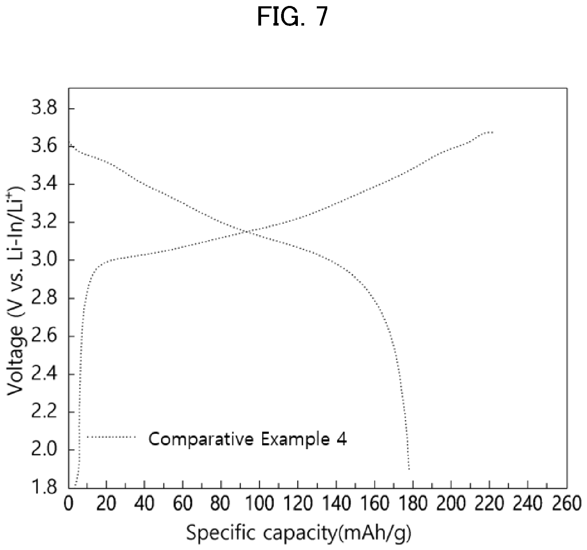

Referring to Tables 1 and 2, and FIGS. 4 to 7, in Examples 1 to 4 where the first solid electrolyte and the second solid electrolyte were used, the second solid electrolyte had an average particle diameter greater than that of the first solid electrolyte, the porosity of the cathode active material layer was 10% or more and less than 20%, and the mixture density was 2.3 g/cc or more, the initial efficiencies were improved compared those from Comparative Examples 1 to 5.

In Examples 1 and 4, the weight of the first solid electrolyte included in the cathode active material layer was greater than the weight of the second solid electrolyte, and the initial discharge capacity and the initial efficiency were further improved.

## Claims

1. A cathode for a secondary battery, comprising:
a cathode current collector; and
a cathode active material layer formed on the cathode current collector and including a cathode active material and a solid electrolyte;
wherein the solid electrolyte includes a first solid electrolyte and a second solid electrolyte having an average particle diameter greater than that of the first solid electrolyte, and
a porosity of the cathode active material layer is 10% or more and less than 20%, and a mixture density of the cathode active material layer is 2.3 g/cc or more.

2. The cathode for a secondary battery of claim 1, wherein a weight ratio of the first solid electrolyte to the second solid electrolyte is in a range from 0.3 to 4.0.

3. The cathode for a secondary battery of claim 1, wherein a weight of the first solid electrolyte is greater than or equal to a weight of the second solid electrolyte.

4. The cathode for a secondary battery of claim 1, wherein an average particle diameter (D50) of the first solid electrolyte above is 1.5 µm or less, and
an average particle diameter of the second solid electrolyte is 2.0 µm or more.

5. The cathode for a secondary battery of claim 1, wherein a ratio of an average particle diameter of the second solid electrolyte to an average particle diameter of the first solid electrolyte is greater than 1.0, and 10 or less.

6. The cathode for a secondary battery of claim 1, wherein a solid electrolyte is included in an amount from 10 wt% to 40 wt% based on a total weight of the cathode active material layer.

7. The cathode for a secondary battery of claim 1, wherein an average particle diameter of the cathode active material is in a range from 2.0 µm to 14.0 µm.

8. The cathode for a secondary battery of claim 1, wherein a ratio of an average particle diameter of the cathode active material to an average particle diameter of the first solid electrolyte is in a range from 1.5 to 24.0.

9. The cathode for a secondary battery of claim 1, wherein a ratio of an average particle diameter of the cathode active material to an average particle diameter of the second solid electrolyte is in a range from 0.25 to 6.0.

10. The cathode for a secondary battery of claim 1, wherein the first solid electrolyte and the second solid electrolyte are sulfide-based solid electrolytes.

11. The cathode for a secondary battery of claim 1, wherein the first solid electrolyte and the second solid electrolyte are sulfide-based solid electrolytes including Li, P, S and Cl.

12. The cathode for a secondary battery of claim 1, wherein the cathode active material layer includes a styrene butadiene styrene block copolymer (SBS), butadiene rubber (BR), nitrile butadiene rubber (NBR), styrene butadiene rubber (SBR), or a combination thereof.

13. A secondary battery, comprising:
the cathode of any one of claims 1 to 12;
an anode opposing the cathode and including an anode active material layer; and
a solid electrolyte layer disposed between the cathode and the anode.

14. The secondary battery of claim 13, wherein the anode active material layer includes the anode active material having a particle shape and a solid electrolyte, and
the solid electrolyte includes the same solid electrolyte as the first solid electrolyte included in the cathode active material layer.

15. The secondary battery of claim 13, wherein the solid electrolyte layer includes the same solid electrolyte as the second solid electrolyte included in the cathode active material layer.

16. A method of manufacturing a cathode for a secondary battery, comprising:
preparing a cathode slurry by mixing a first solid electrolyte, a second solid electrolyte having a larger particle diameter than that of the first solid electrolyte, and a cathode active material;
loading and drying the cathode slurry on a cathode current collector to form a preliminary active material layer; and
pressing the preliminary active material layer to form a cathode active material layer that has porosity of 10% or more and less than 20%, and a mixture density of 2.3 g/cc or more.

17. The method of manufacturing a cathode for a secondary battery of claim 16, wherein a weight ratio of the first solid electrolyte to the second solid electrolyte in the cathode slurry is in a range from 0.3 to 4.0.

18. The method of manufacturing a cathode for a secondary battery of claim 16, wherein a weight of the first solid electrolyte in the cathode slurry is greater than or equal to a weight of the second solid electrolyte.

19. The method of manufacturing a cathode for a secondary battery of claim 16, wherein the preliminary active material layer is pressed at a pressure of 250 Mpa to 500 Mpa at a temperature of 50 °C to 80 °C.

20. The method of manufacturing a cathode for a secondary battery of claim 16, wherein a mixture density of the preliminary active material layer is 1.5 g/cc or more.
